# EUROPEAN PATENT APPLICATION

(11) **EP 4 279 821 A1**
(43) Date of publication of application: **22.11.2023**
(21) Application number: 22174108.5
(22) Date of filing: 18.05.2022
(51) Int. Cl.: F24C 15/20

(54) **FILTER FOR AN AIRCRAFT OVEN**

(71) Applicant: B/E Aerospace, Inc., Winston-Salem, NC 27105 (US)
(72) Inventor: HUIJSING, Hans, Nieuwegein (NL)
(74) Representative: Dehns

(57) **Abstract**

A filter (200, 300) for an aircraft oven, the filter comprising a single-piece of sintered metal or porous aluminium.

## Description

### TECHNICAL FIELD

This disclosure relates to a filter for an aircraft oven. In particular, this disclosure relates to a single-piece filter for an aircraft oven.

### BACKGROUND

Aircraft ovens include an inner cavity and an outer cavity. Typically, filters are used to ensure that any particles passing between the inner cavity and the outer cavity are captured so as to avoid fault in operation of the aircraft oven. Usually, the filters require assembly before fitting into the aircraft oven. These filters are also prone to corrosion during their intended use, which can lead to high volumes of maintenance. Therefore, there exists a need for an improved filter for an aircraft oven.

### SUMMARY

In one aspect, there is provided a filter for an aircraft oven, the filter comprises a single-piece of sintered metal or porous aluminium.

The filter may be cylindrical.

The filter may include a first end, a second end, an outer wall extending between the first end and the second end, and wherein the filter may further comprise an opening in the second end, an inner first end located between the first end and the second end and an inner wall extending between the inner first end and the opening. An area defined by the inner first end, the opening and the inner wall may be hollow.

In another aspect, there is provided an aircraft oven. The aircraft oven comprises an inner portion and an outer portion. The inner portion and the outer portion (22) are separated by a wall. The aircraft oven further comprises a nozzle configured to extend from the inner portion to the outer portion through the wall, and a filter as described above provided in the inner portion and provided adjacent the nozzle.

The filter may be provided over the nozzle. Alternatively, the wall may include a recessed area and the filter is configured to be provided in the recessed area. The nozzle may extend from the recessed area to the outer portion.

In another aspect, there is provided a method of fitting the filter, as described above, in the aircraft oven, described above. The method comprises providing the filter in the inner portion and adjacent the nozzle.

In the method, the filter may be provided over the nozzle. Alternatively, the wall may include a recessed area and the filter is configured to be provided in the recessed area. The nozzle may extend from the recessed area to the outer portion.

### BRIEF DESCRITPION OF THE DRAWINGS

Figure 1a shows a filter for an aircraft oven.
Figure 1b shows the filter of Figure 1a fitted over a nozzle.
Figure 2a shows an example of a filter for an aircraft oven viewed from the top.
Figure 2b shows an example of the filter of Figure 2a viewed from the bottom.
Figure 3 shows another example of a filter for an aircraft oven.
Figure 4a shows the filter of Figures 2a and 2b fitted over a nozzle.
Figure 4b shows the filter of Figures 2a and 2b provided in an oven.

### DETAILED DESCRIPTION

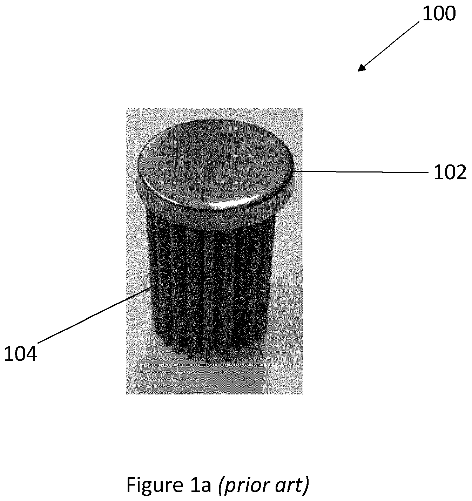

Figure 1a shows a filter 100 for an aircraft oven (not shown). The filter 100 includes an end cap 102 and a mesh filter 104. On assembly, the mesh filter 104 is manually fixed and attached to the end cap 102. This can lead to error in attaching the mesh filter 104 to the end cap 102 which can result in a fault in the function of the filter 100. The end cap 102 and mesh filter 104 may be made from the same or different materials. For example, the end cap 102 and mesh filter 104 may be made from various metals. Since the end cap 102 and mesh filter 104 are manually attached before installation, there may be incidences where they are not fitted properly and this may result in the end cap 102 and the mesh filter 104 suffering from a failure (e.g. coming apart) during fitting. The end cap 102 and the mesh filter 104 are usually formed from different materials (e.g. different metals), which can lead to corrosion (e.g. dissimilar metal corrosion). Therefore, the filter 100 may need to be maintained frequently or even replaced frequently through the lifetime of the aircraft oven. As can be appreciated, the filter 100 needs to be fitted (or retrofitted) in small spaces in aircraft ovens and, therefore, there are possibilities that the end cap 102 and the mesh filter 104 may come apart during fitment.

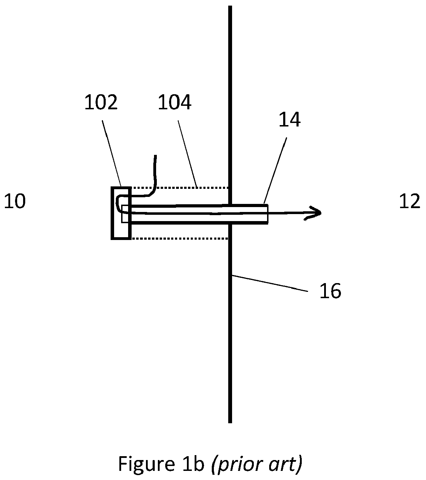

Figure 1b shows the filter of Figure 1a fitted over a nozzle 14 of an aircraft oven. The aircraft oven may include an inner portion 10 and an outer portion 12. The inner portion 10 and outer portion 12 are separated by a wall 16. The nozzle 14 extends through the wall 16. As can be seen in Figure 1b, air flow moves from the inner portion 10 to the outer portion 12 in the direction of the arrow and through the nozzle 14. In order to capture particles, the mesh filter 104 and end cap 102 are provided over the nozzle 14 in the inner portion 10 of the aircraft oven. In this way, particles can be captured by the mesh filter 104 as the air moves in the direction of the arrow.

Generally, there is provided in this disclosure a filter for an aircraft oven. For example, a filter for an aircraft oven may be placed between an inner cavity and an outer cavity to ensure that particles passing between the inner cavity and the outer cavity are captured to ensure a safe functioning of the aircraft oven. In particular, there is provided a single-piece filter for an aircraft oven that is capable of capturing particles so as to avoid assembly before installation and to ensure safe functioning of the aircraft oven.

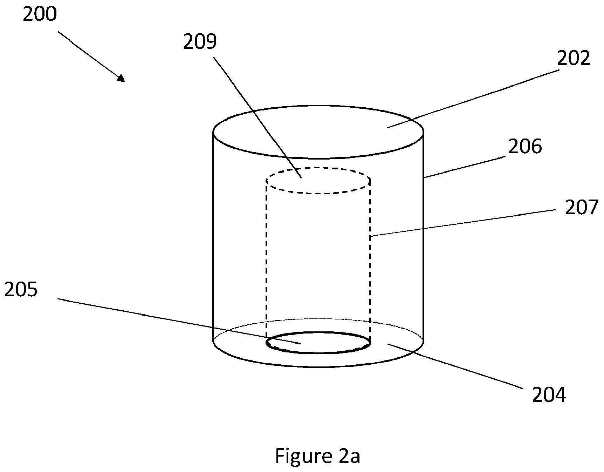

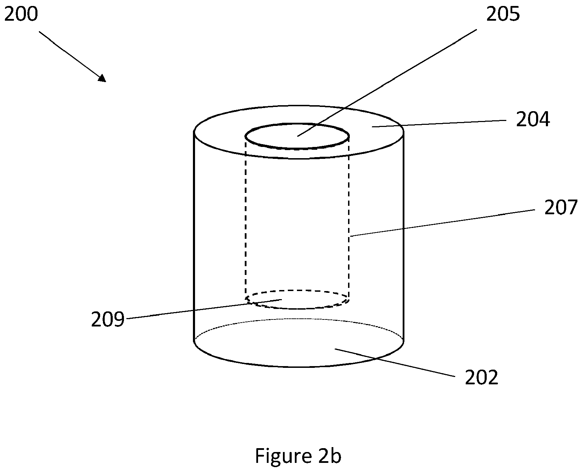

Figures 2a and 2b show an example of a filter 200 for an aircraft oven (not shown). Generally, and as shown in Figure 2a, the filter 200 has a 'top-hat' configuration and is made from a single material to absorb and/or capture particles during use. The filter 200 may include a first end 202 and a second end 204. An outer wall 206 extends between the first end 202 and the second end 204. There may be provided an opening 205 in the second end 204 and an inner first end 209 located between the first end 202 and the second end 204 of the filter. There may be provided an inner wall 207 extending between the inner first end 209 and the opening 205. It is envisaged that the area defined by the inner first end 209, the opening 205 and the inner wall 207 is hollow to allow the filter 200 to be placed over, as an example, a nozzle (or outlet) of the aircraft oven (not shown). It is envisaged that the filter 200 is formed as a single-piece of material. In particular, the filter 200 may be formed from sintered metal or porous aluminium such that particles may be captured in the aircraft oven during use.

Although the filter 200 is shown as cylindrical in Figures 2a and 2b, it is envisaged that the filter 200 could be any other shape that may be provided to an aircraft oven. For example, the filter 200 may be a cuboid or a disc, and the like. Since there is no separate end cap, for example as shown in Figure 1a, the filter 200 includes a greater filter surface area that can be used. Therefore, the filter 200 could be manufactured to be smaller than filters that include an end cap, but still allow for the same flow rate through the aircraft oven.

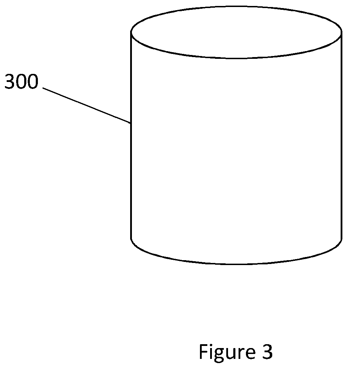

Figure 3 shows another example of a filter 300 for an aircraft oven (again, the aircraft oven is not shown). The filter 300 of Figure 3 is shown as a solid-piece filter (i.e., without the hollow interior for receiving a nozzle). The filter 300 may be positioned between an inner cavity and an outer cavity of an aircraft oven to ensure that particles are captured by the filter 300. In order to capture the particles, the filter 300 is formed from sintered metal or porous aluminium.

Although the filter 300 is shown as cylindrical in Figure 3, it is envisaged that the filter 300 could be any other shape that may be provided to an aircraft oven. For example, the filter 300 may be a cuboid or a disc, and the like.

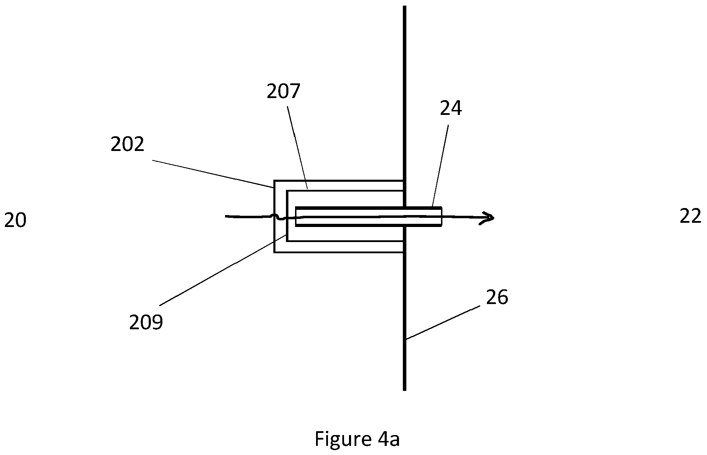

Figure 4a shows an example of the filter of Figures 2a and 2b fitted over a nozzle 24, much in the same way that the filter of Figure 1a is fitted over the nozzle 14 as shown in Figure 1b. As shown in Figure 4a, the inner wall 207, the first end 202 and the inner first end 209 are configured to surround the nozzle 24. The aircraft oven may include an inner portion 20 and an outer portion 22. The inner portion 20 and the outer portion 22 are separated by a wall 26. The nozzle 24 extends through the wall 26. Air can flow from the inner portion 20 to the outer portion 22 in the direction shown by the arrow through the nozzle 24. Surrounding the nozzle 24 with the inner wall 207, the first end 202 and the inner first end 209 allows for particles to be captured in the material as air flows from the inner portion 20 of the aircraft oven to the outer portion 22 of the aircraft oven.

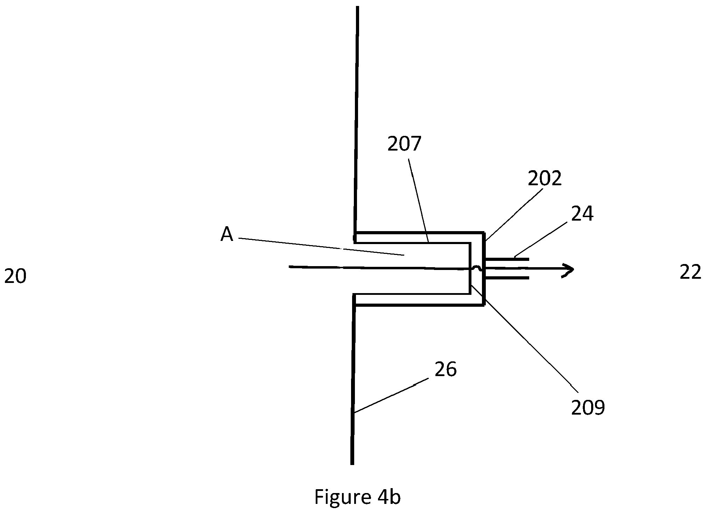

Figure 4b shows another example of the filter of Figures 2a and 2b fitted in a recessed area A of a wall 26 of the aircraft oven. The recessed area A is provided in the wall 26 and leads to a nozzle 24. As shown in Figure 4b, the filter may be provided in the recessed area A such that the first end 202 is adjacent the nozzle 24. The aircraft oven may include an inner portion 20 and an outer portion 22. The inner portion 20 and the outer portion 22 are separated by the wall 26 and the recessed area A. The nozzle 24 extends from the recessed area A to the outer portion 22 to expel air from the inner portion 20. As air passes through the recessed area A in the direction of the arrow, the air contacts the inner wall 207, the inner end 209 and the first end 202 of the filter before moving through the nozzle 24 to the outer portion 22 of the aircraft oven. In this way, the material of the filter can capture particles from the air as the air passes from the inner portion 20 of the aircraft oven to the outer portion 22 of the aircraft oven. In this example, the filter may also be a solid piece filter as shown in Figure 3.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A filter (200, 300) for an aircraft oven, the filter comprising a single-piece of sintered metal or porous aluminium.

2. The filter of claim 1, wherein the filter (200, 300) is cylindrical.

3. The filter of claims 1 or 2, wherein the filter includes a first end (202), a second end (204), an outer wall (206) extending between the first end (202) and the second end (204), and wherein the filter further comprises an opening (205) in the second end (204), an inner first end (209) located between the first end (202) and the second end (204) and an inner wall (207) extending between the inner first end (209) and the opening (205).

4. The filter of claim 3, wherein an area defined by the inner first end (209), the opening (205) and the inner wall (207) is hollow.

5. An aircraft oven comprising:
an inner portion (20);
an outer portion (22), wherein the inner portion (20) and the outer portion (22) are separated by a wall (26);
a nozzle (24) configured to extend from the inner portion (20) to the outer portion (24) through the wall (26); and
a filter as claimed in claim 1 provided in the inner portion (24) and provided adjacent the nozzle (24).

6. The aircraft oven of claim 5, wherein the filter is provided over the nozzle (24).

7. The aircraft oven of claim 5, wherein the wall (26) includes a recessed area (A) and the filter is configured to be provided in the recessed area (A).

8. The aircraft oven of claim 6, wherein the nozzle (24) extends from the recessed area (24) to the outer portion (22).

9. A method of fitting the filter, as claimed in claim 1, in the aircraft oven, as claimed in claim 5, the method comprising:
providing the filter in the inner portion and adjacent the nozzle.

10. The method of claim 9, wherein the filter is provided over the nozzle.

11. The method of claim 9, wherein the wall includes a recessed area (A) and the filter is provided in the recessed area (A).

12. The aircraft oven of claim 11, wherein the nozzle extends from the recessed area to the outer portion.
